# EUROPEAN PATENT SPECIFICATION

(11) **EP 2 589 513 B1**
(45) Date of publication and mention of the grant of the patent: **21.08.2019**
(21) Application number: 11187612.4
(22) Date of filing: 03.11.2011
(51) Int. Cl.: B60R 1/00, H04N 17/00

(54) **Vision system for a motor vehicle**
Sichtsystem für ein Kraftfahrzeug
Système de vision pour véhicule à moteur

(43) Date of publication of application: 08.05.2013
(73) Proprietor: Veoneer Sweden AB, 447 83 Vårgårda (SE)
(72) Inventor: Forslund, David, 58432 Linköping (SE); Lundmark, Astrid, 58750 Linköping (SE)
(74) Representative: Müller Verweyen

(56) References cited:
- EP-A2- 0 749 266
- EP-A2- 1 902 900
- WO-A2-2004/007255
- CN-A- 101 241 197
- JP-A- H07 335 379
- US-A1- 2006 171 704

## Description

The invention relates to a generic vision system for a motor vehicle.

In such systems both online and offline self-diagnosis of the imaging devices, for example IR cameras, is more and more desirable. However, diagnosis based on image data captured under normal operation conditions is highly dependent on the surrounding scene. Therefore, it is difficult or in some cases impossible to draw reliable conclusions from normal image data. Offline diagnosis using for example blackbodies with well-defined temperatures produces good results but cannot be performed in normal operation during driving.

US 2006 0171704 A1 discloses a vision system with a camera, a window arranged in front of the camera and an electric heating device for defrosting and defogging the window. In one embodiment, condensation on the window is detected by closing the camera housing, illuminating the enclosed cavity by an auxiliary light and capture images of the enclosed and illuminated cavity.

EP 1 902 900 A2 discloses a generic vision system with an electro-chromatic gel layer provided on the front windshield of the vehicle.

CN 101241197 A discloses a Germanium window with a heating resistance layer separated from the Germanium body by an insulation film layer.

The objective of the invention is to provide a vision system allowing for simple but effective and reliable self-diagnosis of the imaging device, both offline and online.

The invention solves this objective with the features of the independent claims. By changing a window property and evaluating the influence of said changing window property on image data taken by said imaging device, a simple but effective and reliable way of self-diagnosis of the imaging device can be realised. The invention uses the finding that the image data is characteristically influenced by variation of certain window properties, which can be related to the state, condition and/or performance of the imaging device. A particular advantage of the proposed vision system and method is that the proposed self-diagnosis can be performed not only offline but also online during driving.

The traditional function of a window heater, which is well known, is to melt snow and ice which may be blocking the visual pathway, and also to prevent condensation of water on the window, which would lead to decreased image signal.

The new functionality disclosed here is to use a window heater to influence the level of radiation falling on the sensor and thereby provide additional information for detection of camera malfunctions. The window is not totally translucent to the radiation normally passing through it; some of the radiation is transmitted, some reflected, and some absorbed. Since the window can absorb radiation, due to the properties of optical materials it can also emit radiation. In the case where the window is made of Germanium, as a typical example 80% of the radiation can be transmitted through the window at normal operating temperatures, a part of the remaining 20% is reflected, and the remaining part is absorbed. The ability of the window to absorb and emit radiation makes it possible to use the window for influencing the radiation levels at a certain point in the camera. For temperatures well above normal operating temperatures, the optical properties of Germanium shift to less transmission and more emission, making it even more effective for diagnostic purposes.

The window parameter changing means is a window temperature changing device arranged and controllable to change the temperature of said window. It has been found that the influence of window temperature variations on the image data provides characteristic footprints and therefore is particularly suited for performing self-diagnosis of the imaging device. Furthermore, window temperature variations can easily be generated and controlled.

The window temperature changing device comprises a heating element which is particularly easy to realize for example by means of heating wire, mesh or the like. Additionally, the window temperature changing device may also comprise a cooling element.

Many different conditions of the imaging system can advantageously be diagnosed using the invention, among them preferably a blockage of the imaging device caused by an external object or by any internal object, for instance a shutter of said imaging device; abrasions of the window; lowered responsivity of the image sensor; and/or defective pixels of a sensor of the imaging device.

The window is made of a conducting material, more specifically a semiconductor material. The window is made of an infrared (IR) partially transparent material. According to the invention, the window material is Germanium, or a material based on Germanium.

The window can preferably be integrated in an optics arrangement of the imaging device which reduces the number of separate parts. However, the invention also covers a window separate from the optics arrangement of the imaging device.

In the following the invention is described on the basis of preferred embodiments with reference to the accompanying drawings, wherein:
- Fig. 1:: a schematic illustration of a vision system according the invention;
- Fig. 2:: a part of a vision system according to an embodiment of the invention;
- Fig. 3:: a part of a vision system according to another embodiment of the invention; and
- Fig. 4:: a window of a vision system according to the invention.

The vision system 10 is mounted in a motor vehicle and comprises at least one imaging device 12 for acquiring images of a region surrounding the motor vehicle, for example a region in front of the motor vehicle. Preferably the imaging device 12 mainly operates in the visible and/or infrared region, where infrared covers near IR with wavelengths below 5 microns and/or far IR with wavelengths beyond 5 microns. The imaging device 12 may in particular be an infrared camera. The vision system 10 may comprise a plurality of imaging devices 12 in particular forming a stereo imaging means; alternatively only one imaging device 12 forming a mono imaging means can be used.

The camera 12 comprises an optics arrangement 20 and a two-dimensional image sensor 21, in particular an infrared or an optical sensor, provided to convert incident infrared radiation or visible light transmitted through the camera 12 into an electrical signal containing image information of the recorded scene.

Image data are read out from the imaging device 12 and provided to an electronic processing means 14 where image processing and data processing is carried out by corresponding software. In particular, the image and data processing in the processing means 14 comprises the following functions: identification and classification of possible objects surrounding the motor vehicle, such as pedestrians, other vehicles, bicyclists or large animals; tracking over time the position of identified object candidates in the recorded images; calculation of a collision probability between the vehicle and a detected object; and/or activation or control of at least one driver assistance/safety function means 18, like a display means, depending on the result of the object detection and tracking processing and/or said collision probability calculation. The driver assistance/safety function may alternatively be braking and/or steering the car, and/or triggering of safety systems such as airbags.

The electronic processing means 14 is preferably programmed or programmable and expediently comprises a microprocessor or micro-controller. The electronic processing means 14 can preferably be realized in a digital signal processor (DSP). The electronic processing means 14 is preferably realised in at least one on-board electronic control unit (ECU) and may be connected to the imaging device 12 via a separate cable or a vehicle data bus. In another embodiment an ECU and one or more of the imaging devices 12 can be integrated into a single unit, where a one box solution including an ECU and all imaging devices 12 can be preferred. All steps from imaging and image processing to activation or control of driver assistance/safety function means 18 are performed automatically and continuously during driving in real time.

The vision system 10 comprises a window 22 arranged in front of the imaging device 12 such that incoming radiation from the environment surrounding the motor vehicle first passes through the window 22, then through the optics arrangement 20 and is finally incident on the image sensor 21. A shutter not shown in the Figures may be placed between the window 22 and the camera 12.

A property of the window 22 is controllable through a line 23 by the processing means 14. In a preferred embodiment, the line 23 is connected to an electric supply, for example the vehicle battery. A heating element 24 is provided for heating the window 22 when electric current is provided to the heating element 24 from the electric supply via the supply line 23. Non-electric heating elements are also possible. For example, engine heat may be used to heat the window 22.

By heating the window 22 through the line 23 up to for example 40 °C, the radiation transmitted through the window 22 can be varied by a diagnosis algorithm in the processing means. By evaluating the dynamical change of the image data over time caused by the changing window property, a diagnosis of the imaging device 12 can be automatically performed both offline and online during driving. The diagnosis can comprise detecting a blockage of the imaging device 12; a blockage of a shutter of the imaging device not shown in the Figures; abrasion of the window 22; lowered responsivity of the imaging device 12; defective pixels of the image sensor 21.

To detect blockage, it can be possible to detect an increased amount of radiation caused by a material in direct contact with the window 22, compared to the level of radiation caused by the window 22 alone. It can also be possible to use the invention to detect if the blockage is camera-external, e.g. an object stuck in front of the camera 12, or camera-internal, e.g. a shutter stuck in the closed position by observing the dynamic properties of the image values from the camera sensor 21 and relating these to the heater operation and the temperature of the window 22. In the case where the blockage is camera-external, it is also possible that the heating effect will able to eliminate the blockage, if the blockage was caused by water, ice or snow.

It is also possible to detect low responsivity from the camera 12, which may be caused e.g. by loss of vacuum in the sensor 21 encapsulation. The invention makes this possible by using the window 22 as a primitive black-body; increasing the window 22 temperature a certain number of degrees should give rise to a foreseeable increase in the values reported by the camera 12, if the increase is lower, the responsivity of the camera 12 is too low.

Another source of low responsivity of the total camera 12, including the protective window 22, is abrasion of the outer surface of the protective window 22. Abrasion of the protective window 22 can give rise to a higher response than anticipated for a certain rise of the window 22 temperature. This phenomenon, preferably in combination with other diagnostic measures, can be used to diagnose an abraded protective window 22.

Defective pixels of the image sensor 21 are pixels that do not respond the way they should to a variation in the incoming radiation; the response may be too high (producing a pixel that "looks too bright"), too low (producing a pixel that "looks too dark"), or too slow (the pixel shift occurs too late in time). Varying the window 22 temperature gives a shift of incoming intensity level which can be used in the diagnosis of defective pixels of the image sensor 21. Preferably, a shutter of the camera 12 can be operated in combination with varying the properties of the protective window 22 to diagnose the dynamic behaviour of the pixels, providing increased ability to detect slow pixels.

Generally speaking, preferably at least two signals passing the temperature adjustable window 22 are compared in the processing means 14 to detect image deteriorations.

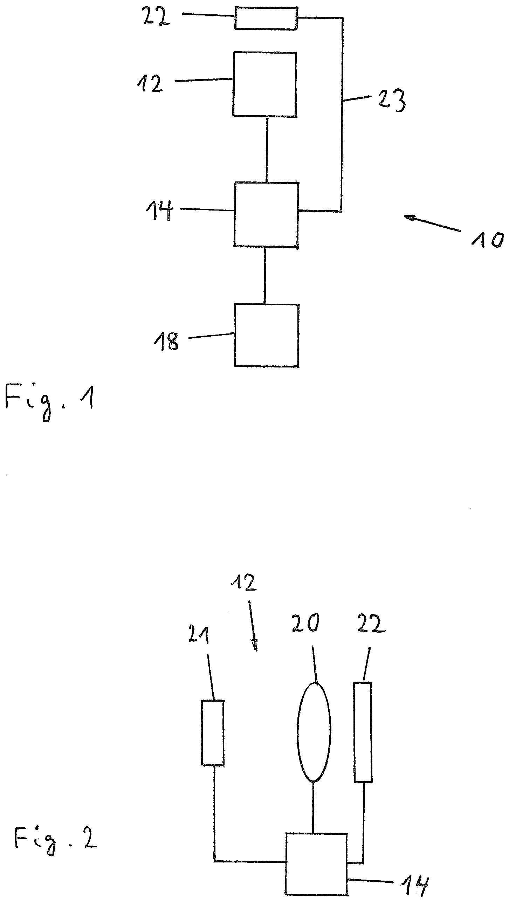

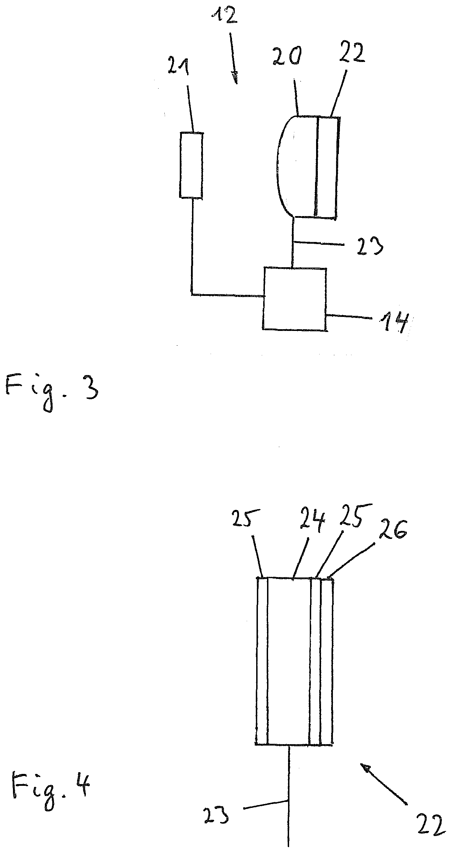

In the embodiment shown in Fig. 2 the window 22 is a separate component from the optics arrangement 22. In this case, for example, a headlight window or the vehicle windshield may be used as window 22. In the embodiment of Fig. 3 the window 22 is integrated into the optics arrangement 22.

Figure 4 shows that the body 24 of the window 22 is made of Germanium such that a current flows through the body 24 in case a voltage is applied at opposite sides of main body 24. In other words, the body 24 being made of a conducting or semi-conducting material forms the heating element. A polarization filter in wire-grid technology may also advantageously be used.

Alternatively, the window 22 may be cooled instead of heated. On both sides of the window 22 the outer surface of the body 24 is coated by an anti-reflection coating layer 25. The window 22 is coated with multi-layer films of Ge and ZnS and/or ZnSe.

The outer surface of the window 22 exposed to the environment is coated with a protection layer 26 to protect the window 22 from being damaged by debris etc. The protection layer 26 is a diamond coating film.

## Claims

1. A vision system (10) for a motor vehicle, comprising an imaging device (12) adapted to take images from a surrounding of the motor vehicle, a window (22) arranged in front of the imaging device (12), and a processing means (14) adapted to perform image processing of images taken by said imaging device (12), wherein said vision system (10) comprises a window property changing means (23, 24) controllable by said processing means to change at least one property of said window (22), and said processing means (14) is adapted to perform a diagnosis procedure of said imaging device (12) by changing said window property through controlling said window property changing means (23, 24), and evaluating the influence of the changing window property on image data taken by said imaging device (12), wherein said window property changing means (23, 24) is a window temperature changing device arranged and controllable to change the temperature of said window (22), and wherein said window temperature changing device (23, 24) comprises a heating element (24), **characterized in that** a body (24) of said window (22) is made of Germanium, or a material based on Germanium, and said body (24) forms said heating element (24), wherein on both sides of the window (22) the outer surface of the body is coated by an anti-reflection coating layer (25) which are multi-layer films of Ge and Zn and/or ZnSe, wherein said window (22) comprises a protection layer (26) on the environmental side of said window (22), which protection layer (26) is a diamond coating film.

2. The vision system as claimed in claim 1, wherein said window temperature changing device comprises a cooling element.

3. The vision system as claimed in any one of the preceding claims; wherein said window parameter changing means (23, 24) is controllable to change a transmittance, reflectivity and/or emissivity property of said window (22).

4. The vision system as claimed in any one of the preceding claims, wherein at least two images taken under different conditions of the window (22) are compared to detect image deteriorations.

5. The vision system as claimed in any one of the preceding claims, wherein said diagnosis procedure is designed to diagnose at least one from the group of following conditions:
- a blockage of said imaging device (12);
- a blockage of a shutter of said imaging device (12);
- abrasions of said window (22);
- lowered responsivity of said imaging device (12);
- defective pixels of an image sensor (21) of said imaging device (12).

6. The vision system as claimed in any one of the preceding claims, wherein said window (22) is made of a conducting material.

7. The vision system as claimed in any one of the preceding claims, wherein said window (22) is made of a semiconductor material.

8. The vision system as claimed in any one of the preceding-claims, wherein said window (22) is made of a fully or partially IR transparent material.

9. The vision system as claimed in any one of the preceding claims, wherein said window (22) is integrated into an optics arrangement (20) of said imaging device.

## Patentansprüche

1. Ein Sichtsystem (10) für ein Kraftfahrzeug, umfassend eine Bilderfassungsvorrichtung (12), die geeignet ist, Bilder von einer Umgebung des Kraftfahrzeugs aufzunehmen, ein Fenster (22), das vor der Bilderfassungsvorrichtung (12) angeordnet ist, und ein Verarbeitungsmittel (14), das geeignet ist, eine Bildverarbeitung von Bildern durchzuführen, die von der Bilderfassungsvorrichtung (12) aufgenommen wurden, wobei das Sichtsystem (10) ein Fenstereigenschaftsänderungsmittel (23, 24) umfasst, das vom Verarbeitungsmittel steuerbar ist, um mindestens eine Eigenschaft des Fensters (22) zu ändern, und das Verarbeitungsmittel (14) geeignet ist, eine Diagnoseprozedur der Bilderfassungsvorrichtung (12) durchzuführen, indem es die Fenstereigenschaft durch Steuern des Fenstereigenschaftsänderungsmittels (23, 24) ändert und den Einfluss der geänderten Fenstereigenschaft auf die von der Bilderfassungsvorrichtung (12) aufgenommenen Bilddaten bewertet, wobei das Fenstereigenschaftsänderungsmittel (23, 24) eine Fenstertemperaturänderungsvorrichtung ist, die angeordnet und steuerbar ist, um die Temperatur des Fensters (22) zu ändern, und wobei die Fenstertemperaturänderungsvorrichtung (23, 24) ein Heizelement (24) umfasst, **dadurch gekennzeichnet, dass** ein Körper (24) des Fensters (22) aus Germanium oder einem Material auf der Basis von Germanium hergestellt ist und dieser Körper (24) das Heizelement (24) bildet, wobei die Außenfläche des Körpers auf beiden Seiten des Fensters (22) mit einer Antireflexionsschicht (25) beschichtet ist, die mehrlagige Filme aus Ge und Zn und/oder ZnSe ist, wobei das Fenster (22) auf der Umgebungsseite des Fensters (22) eine Schutzschicht (26) umfasst, wobei die Schutzschicht (26) ein Diamant-Beschichtungsfilm ist.

2. Das Sichtsystem nach Anspruch 1, wobei die Fenstertemperaturänderungsvorrichtung ein Kühlelement umfasst.

3. Das Sichtsystem nach einem der vorherigen Ansprüche, wobei das Fensterparameteränderungsmittel (23, 24) steuerbar ist, um eine Durchlässigkeits-, Reflexions- und/oder Emissionseigenschaft des Fensters (22) zu ändern.

4. Das Sichtsystem nach einem der vorherigen Ansprüche, wobei mindestens zwei Bilder, die unter verschiedenen Bedingungen des Fensters (22) aufgenommen wurden, verglichen werden, um Bildverschlechterungen zu erkennen.

5. Das Sichtsystem nach einem der vorherigen Ansprüche, wobei die Diagnoseprozedur dazu ausgelegt ist, mindestens eine aus der Gruppe der folgenden Bedingungen zu diagnostizieren:
- eine Blockierung der Bilderfassungsvorrichtung (12);
- eine Blockierung eines Verschlusses der Bilderfassungsvorrichtung (12);
- Abriebschäden des Fensters (22);
- eine verminderte Empfindlichkeit der Bilderfassungsvorrichtung (12);
- defekte Pixel eines Bildsensors (21) der Bilderfassungsvorrichtung (12).

6. Das Sichtsystem nach einem der vorherigen Ansprüche, wobei das Fenster (22) aus einem leitenden Material hergestellt ist.

7. Das Sichtsystem nach einem der vorherigen Ansprüche, wobei das Fenster (22) aus einem Halbleitermaterial hergestellt ist.

8. Das Sichtsystem nach einem der vorherigen Ansprüche, wobei das Fenster (22) aus einem völlig oder teilweise IR-transparenten Material hergestellt ist.

9. Das Sichtsystem nach einem der vorherigen Ansprüche, wobei das Fenster (22) in eine optische Anordnung (20) der Bilderfassungsvorrichtung integriert ist.

## Revendications

1. Un système de vision (10) pour un véhicule motorisé, comprenant un dispositif d'imagerie (12) adapté pour prendre des images d'un environnement du véhicule motorisé, une fenêtre (22) agencée devant le dispositif d'imagerie (12), et un moyen de traitement (14) adapté pour réaliser un traitement d'image d'images prises par ledit dispositif d'imagerie (12), dans lequel ledit système de vision (10) comprend un moyen de changement de propriété de fenêtre (23, 24) pouvant être commandé par ledit moyen de traitement pour changer au moins une propriété de ladite fenêtre (22), et ledit moyen de traitement (14) est adapté pour réaliser une procédure de diagnostic dudit dispositif d'imagerie (12) en changeant ladite propriété de fenêtre par la commande dudit moyen de changement de propriété de fenêtre (23, 24), et en évaluant l'influence du changement de propriété de fenêtre sur des données d'image prises par ledit dispositif d'imagerie (12), dans lequel ledit moyen de changement de propriété de fenêtre (23, 24) est un dispositif de changement de température de fenêtre agencé et pouvant être commandé pour changer la température de ladite fenêtre (22), et dans lequel ledit dispositif de changement de température de fenêtre (23, 24) comprend un élément de chauffage (24), **caractérisé en ce qu'**un corps (24) de ladite fenêtre (22) est réalisé en germanium, ou un matériau à base de germanium, et ledit corps (24) forme ledit élément de chauffage (24), dans lequel sur les deux côtés de la fenêtre (22) la surface extérieure du corps est revêtue d'une couche de revêtement antireflet (25) constituée de films multicouches de Ge et Zn et/ou ZnSe, dans lequel ladite fenêtre (22) comprend une couche de protection (26) sur le côté environnemental de ladite fenêtre (22), laquelle couche de protection (26) est un film de revêtement en diamant.

2. Le système de vision selon la revendication 1, dans lequel ledit dispositif de changement de température de fenêtre comprend un élément de refroidissement.

3. Le système de vision selon l'une quelconque des revendications précédentes, dans lequel ledit moyen de changement de paramètre de fenêtre (23, 24) peut être commandé pour changer une propriété de transmittance, de réflectivité et/ou d'émissivité de ladite fenêtre (22).

4. Le système de vision selon l'une quelconque des revendications précédentes, dans lequel au moins deux images prises dans des conditions différentes de la fenêtre (22) sont comparées pour détecter des détériorations d'image.

5. Le système de vision selon l'une quelconque des revendications précédentes, dans lequel ladite procédure de diagnostic est conçue pour diagnostiquer au moins l'une du groupe de conditions suivantes :
- un blocage dudit dispositif d'imagerie (12) ;
- un blocage d'un obturateur dudit dispositif d'imagerie (12) ;
- des abrasions de ladite fenêtre (22) ;
- un facteur de réponse diminué dudit dispositif d'imagerie (12) ;
- des pixels défectueux d'un capteur d'image (21) dudit dispositif d'imagerie (12).

6. Le système de vision selon l'une quelconque des revendications précédentes, dans lequel ladite fenêtre (22) est réalisée en un matériau conducteur.

7. Le système de vision selon l'une quelconque des revendications précédentes, dans lequel ladite fenêtre (22) est réalisée dans un matériau semi-conducteur.

8. Le système de vision selon l'une quelconque des revendications précédentes, dans lequel ladite fenêtre (22) est réalisée en un matériau totalement ou partiellement transparent aux infrarouges.

9. Le système de vision selon l'une quelconque des revendications précédentes, dans lequel ladite fenêtre (22) est intégrée dans un agencement d'optique (20) dudit dispositif d'imagerie.
